# EUROPÄISCHE PATENTSCHRIFT

(11) **EP 2 504 183 B1**
(45) Veröffentlichungstag und Bekanntmachung des Hinweises auf die Patenterteilung: **25.10.2017**
(21) Anmeldenummer: 10790348.6
(22) Anmeldetag: 25.11.2010
(51) Int. Cl.: B60H 1/00, F25B 45/00

(54) **VERFAHREN ZUM WARTEN EINER FAHRZEUGKLIMAANLAGE UND SERVICE-GERÄT HIERFÜR**
METHOD FOR MAINTAINING A VEHICLE AIR-CONDITIONING UNIT AND SERVICE APPARATUS THEREFOR
PROCÉDÉ POUR ENTRETENIR UN SYSTÈME DE CLIMATISATION DE VÉHICULE ET APPAREIL D'ENTRETIEN À CET EFFET

(30) Priorität: 25.11.2009 DE 102009054436
(43) Veröffentlichungstag der Anmeldung: 03.10.2012
(73) Patentinhaber: Dometic Sweden AB, 171 54 Solna (SE)
(72) Erfinder: ESCH, Franz-Josef, 48477 Hörstel (DE)
(74) Vertreter: Grosse Schumacher Knauer von Hirschhausen
(86) Internationale Anmeldenummer: PCT/EP2010/007155
(87) Internationale Veröffentlichungsnummer: WO 2011/063961

(56) Entgegenhaltungen:
- WO-A1-89/12792
- US-A- 5 535 596
- US-A1- 2009 241 560

## Beschreibung

### GEBIET DER ERFINDUNG

Die Erfindung betrifft ein Verfahren zum Warten einer Fahrzeugklimaanlage mit geschlossenem Kältemittel Kreislaufsystem gemäß Oberbegriff von Anspruch 1 sowie ein Servicegerät hierfür gemäß Oberbegriff von Anspruch 10. Demnach erfolgt die Wartung einer Fahrzeugklimaanlage in zwei Phasen. In einer ersten Phase wird das Kreislaufgemisch aus Kältemittel, Kompressoröl sowie gegebenenfalls weiteren Gemischbestandteilen aus dem Kältemittel-Kreislaufsystem der Fahrzeugklimaanlage in eine Trennstufe mittels eines Kältemittelverdichters über einem Separator abgesaugt. Dabei wird Kältemittel mittels des Separators von dem abgesaugten Kreislaufgemisch getrennt, komprimiert und aufgefangen sowie seine Menge bestimmt. In einer zweiten Wartungsphase wird das Kältemittel-Kreislaufsystem der Fahrzeugklimaanlage mittels einer Vakuumpumpe weitgehend restentleert. Ein entsprechendes Servicegerät für Fahrzeugklimaanlagen ist mit einer Entleer- und einer Befülleinrichtung zum Absaugen des Kältemittel-/Kompressoröl-Gemisches aus dem Kältemittel-Kreislaufsystem einer Fahrzeugklimaanlage und zum Wiederauffüllen der Fahrzeugklimaanlage mit Kältemittel und Kompressoröl versehen. Eine Trennstufe umfasst mindestens einen Ölseparator, einen Kältemittelverdichter und eine Kältemittelwägeeinrichtung. Außerdem ist eine Vakuumpumpe für eine weitgehende Restentleerung des Kältemittel-Kreislaufsystems vorgesehen.

### TECHNISCHER HINTERGRUND

Service-Geräte für Fahrzeugklimaanlagen dienen unter anderem dazu, im Rahmen einer Wartung den Kältemittelkreislauf unterschiedlichster Fahrzeugklimaanlagen von Zeit zu Zeit zu entleeren und eine neue Kältemittelfüllung einzubringen. Dabei ist es erforderlich genaue Mengen und Kältemittelspezifikationen einzuhalten. Außerdem muss in vielen Fällen Schmieröl für den Kompressor des Kältemittelkreislaufs der Fahrzeugklimaanlage entfernt und wieder nachgefüllt werden. Auch dies erfolgt in vom Fahrzeugtyp bzw. Klimagerätetyp abhängigen Mengen und Spezifikationen. Manche Fahrzeugklimaanlagen benötigen außerdem ein Additiv für den Kältemittelkreislauf, welches bei einem Wartungsservice ebenfalls teilweise ausgetauscht wird. Üblicherweise gelangt das Kompressorenöl in den Kältemittelkreislauf und wird beim Betrieb der Fahrzeugklimaanlagen daher mit umgepumpt. Nur ganz bestimmte Paarungen von Kältemittel und Kompressorenöl sind für diesen Zweck miteinander verträglich. Um nach dem Absaugen des Kältemittel/Kompressorenölgemisches zumindest einen Teil des Kältemittels zur Wiederverwendung zurückgewinnen zu können, weisen Service-Geräte für Fahrzeugklimaanlagen üblicherweise auch einen Separator auf, mit welchem Kältemittel aus dem Kältemittel/Kompressorenölgemisch zur Wiederverwendung abgetrennt werden kann. Gebrauchtes Kompressorenöl sowie, gegebenenfalls, gebrauchtes Additiv wird/werden in der Regel durch das Service-Gerät aufgefangen, um später verworfen zu werden.

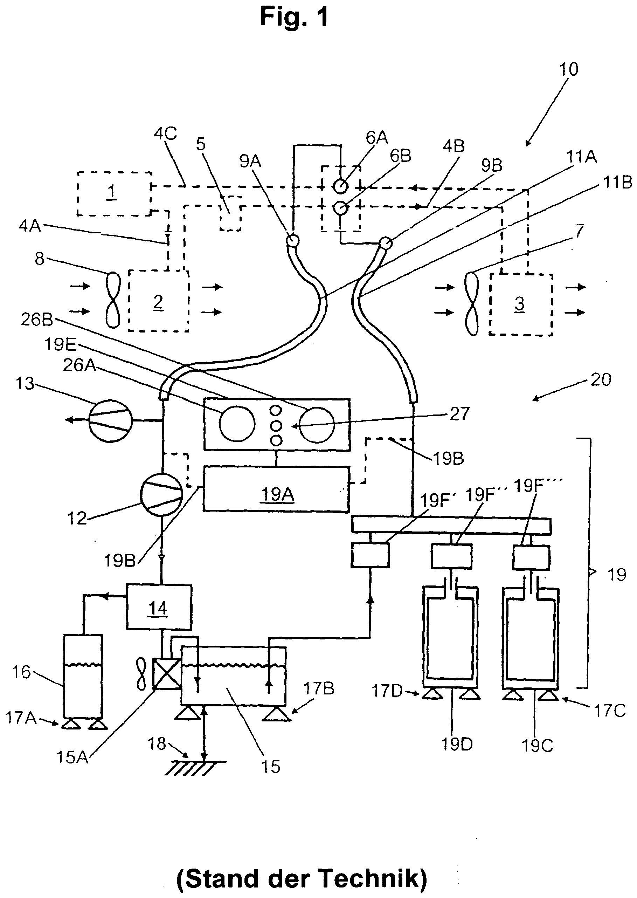

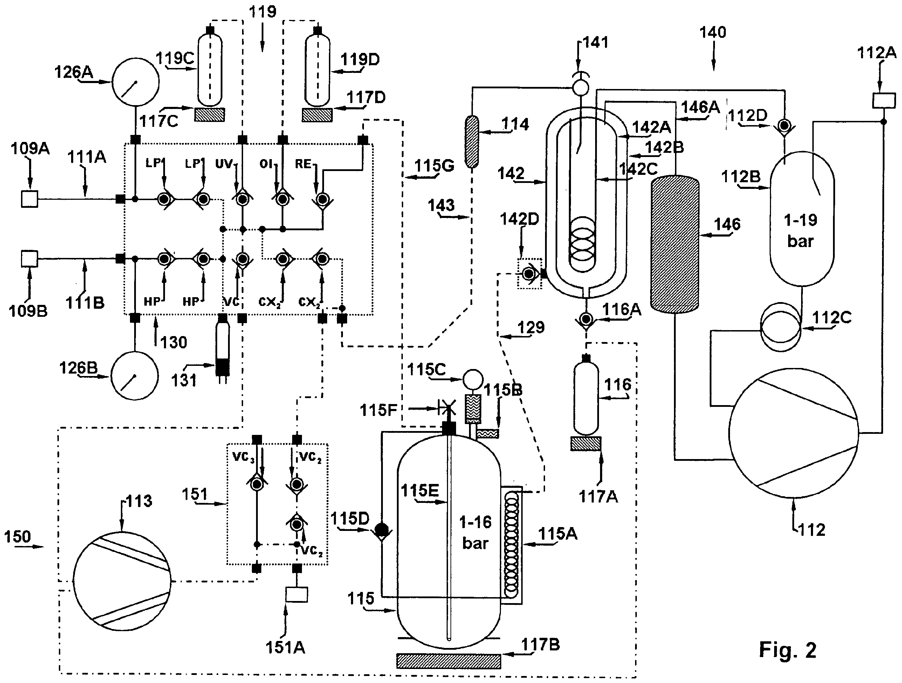

Aus der WO 2007/085480 der Anmelderin ist ein Service-Gerät für Fahrzeugklimaanlagen gemäß dem Blockschaltbild und Fig. 1 bekannt. Diese zeigt in durchgezogener Linie die wesentlichen Bestandteile des gattungsgemäßen Service-Gerätes für eine Fahrzeugklimaanlage und in gestrichelten Linien eine zu wartende Fahrzeugklimaanlage. Letztere besteht aus einem ölgeschmierten Kompressor 1, einem Verflüssiger 2, einen Verdampfer 3, sowie zwischen diesen Komponenten, ein geschlossenes Kühlmittelsystem herstellende Rohrleitungen 4A-4C. Ferner ist ein Trockner 5 vorgesehen, der auch als Sammler oder Reservoir für Kältemittel dienen kann. Schließlich sind für den Fluidaustausch zwei Serviceanschlüsse 6a/6b in den Kältemittelkreislauf eingebaut. Die am Verdampfer 3 zur Verfügung stehende Kälte wird durch ein Kaltluftgebläse 7 ab- und dem Fahrzeuginnenraum zugeführt. Die Kondensationswärme des Verflüssigers 2 wird durch ein Warmluftgebläse 8 abtransportiert. Service-Anschluss-Verbinder 9A und 9B gestatten es, im Wartungsfalle Kältemittel/Kompressoröl-Gemisch an den Serviceanschlüssen 6A, 6B abzuziehen bzw. aufzufüllen. Die insgesamt mit 10 bezifferte Fahrzeugklimaanlage unterscheidet sich von Fahrzeugtyp zu Fahrzeugtyp und ist nicht Gegenstand der vorliegenden Erfindung.

Ein insgesamt mit 20 bezeichnetes Servicegerät für eine Fahrzeugklimaanlage weißt flexible Druckschläuche 11A, 11B zum Verbinden des Servicegerätes 20 mit der Fahrzeugklimaanlage 10 über die Service-Anschlussverbinder 9A, 9B an den Serviceanschlüssen 6A, 6B auf. Eine als Kältemittelkompressor ausgebildete Absaugpumpe 12 fördert gebrauchtes Kältemittel/Kompressoröl-Gemisch über die Druckschläuche 11A rund 11B und den Separator 14. Dieser trennt durch Verdampfen Kältemittel aus dem abgesaugten Gemisch ab und führt dies einem als Druckbehälter ausgebildeten Kältemittelvorrat 15 zu. Im Separator 14 abgeschiedenes Kompressoröl/Additiv-Gemisch wird in einem austauschbaren Altölbehälter 16 aufgefangen und mittels einer Wägeeinrichtung 17A gewichtsmäßig erfaßt. Mit dem Kältemittelvorrat 15 ist ein luftgekühlter Kältemittelverflüssiger 15A fest verbunden. Damit wird rückgeführtes Kältemittel überwiegend in flüssiger Form dem Kältemittelvorrat 15 zugeführt. Der gesamte Kältemittelvorrat samt Verflüssiger ruht auf einer weiteren Wägeeinrichtung 17B zum Erfassen des zu- und abgeführten sowie des vorrätigen Kältemittels. Eine Vakuumpumpe 13 sorgt nach dem Absaugen des gebrauchten Gemisches für den für das Wiederbefüllen erforderlichen Unterdruck im Kreislauf der Fahrzeugklimaanlage und gibt das abgesaugte Gasvolumen an die Atmosphäre ab.

Ein insgesamt mit 19 bezeichnetes Wiederauffüllsystem besteht im wesentlichen aus austauschbaren Vorratsbehältern 19D für Kompressoröl und 19C für Additive, einer Steuereinheit 19A mit Ventilblock und Steuerleitungen 19B, einer Fernanzeige 19E sowie Dosier- und Ventileinheiten 19F' bis 19F"'. Die Vorratsbehälter 19C und 19D sind bevorzugt wägbar. Hierzu dienen weitere Wägeeinrichtungen 17C, 17D.

Aus der DE 20 2008 003 123 U1 ist ein weiteres Service-Gerät für Fahrzeugklimaanlagen der Anmelderin bekannt, bei dem die Wiederbefüllbarkeit der zuvor evakuierten Fahrzeug-Klimaanlage durch eine im Kältemittel-Vorratsbehälter vorgesehene Wärmequelle zur Druckerhöhung des Kältemittels verbessert wird. Ein vergleichbares Servicegerät für Fahrzeugklimaanlagen ist aus der US 2009/0158756 A1 bekannt.

Ferner ist aus der US 2009/0241560 A1 ein nicht gattungsgemäßes Servicegerät für Fahrzeugklimaanlagen bekannt, bei dem zwar aus der Fahrzeugklimaanlage abströmendes Kältemittel/Kompressoröl-Gemisch über einen Separator geführt und das Kältemittel nach Kompression weiterverwendet wird sowie eine Restentleerung der Fahrzeugklimaanlage mittels einer Vakuumpumpe erfolgt. Die Verwendung der Restentleerungsgasmenge wird nicht beschrieben, ebenso wenig Diagnosemittel für den Zustand der Fahrzeugklimaanlage.

### DARSTELLUNG DER ERFINDUNG

Davon ausgehend liegt der Erfindung die Aufgabe zugrunde, beim Warten von Fahrzeugklimaanlagen die in dem Kältemittel-Kreislaufsystem der Fahrzeugklimaanlage zunächst vorhandenen Kältemittelmengen möglichst genau zu erfassen, um die Diagnose über den Zustand der Fahrzeugklimaanlage zu verbessern. Zur Lösung dieser Aufgabe wird ein Verfahren mit den Merkmalen des Anspruchs 1 sowie ein Servicegerät mit den Merkmalen des Anspruchs 10 vorgeschlagen. Demnach ist hinsichtlich eines Wartungsverfahrens vorgesehen, die in der zweiten Wartungsphase mit der Vakuumpumpe abgepumpten Restgase mittels des Kältemittelverdichters durch die Trennstufe zu leiten und die Menge des dabei aufgefangenen Kältemittelrestes ebenfalls zu bestimmen. Hinsichtlich eines gattungsgemäßen Servicegerätes ist mindestens ein druck- und/oder zeitgesteuerter Umschalt-Ventilblock in der Weise vorgesehen, dass das Kältemittelkreislaufsystem der Fahrzeugklimaanlage wahlweise mit der Trennstufe direkt fluidisch durchverbunden ist und dass die Strömungsverbindung vom Kältemittel-Kreislaufsystem zur Trennstufe wahlweise über die Vakuumpumpe umgeleitet wird.

Durch die Erfindung wird die Diagnosemöglichkeit über den Zustand der Fahrzeugklimaanlage im Zuge des gelegentlichen Austauschs des Kältemittel/Kompressoröl-Gemischs erheblich verbessert. So kann zum Einen festgestellt werden, ob der Kältemittelverlust, den das geschlossene Kältemittel-Kreislaufsystem der Fahrzeugklimaanlage seit der letzten Wartung erlitten hat, innerhalb der gesetzlichen Grenzen, z.B. unterhalb von 40 oder 60 gr. geblieben ist. Es kann also die Einhaltung gesetzlicher Grenzen überwacht werden.

Wenn über die natürlichen Kältemittelleckagemengen, die bei Fahrzeugklimaanlagen baubedingt fast unvermeidlich sind, hinausgehende Kühlmittelverluste festgestellt werden sollten, kann dies u.a. an Leckagen durch Steinschlag, Materialverschleiß oder Komponentendefekten liegen. In der Vergangenheit ist diesem Gesichtspunkt keine sonderliche Aufmerksamkeit geschenkt worden. Im Vordergrund stand, einen Teil des durch Expansion beim Entleeren der Fahrzeugklimaanlage anfallenden Kältemittels wiederzugewinnen, um so eine gewisse Kostensenkung zu erreichen. Rückschlüsse auf den Zustand oder Art und Umfang etwaiger Defekte der Fahrzeugklimaanlage und insbesondere des Kältemittel-Kreislaufsystems waren nur sehr pauschal möglich, insbesondere weil das Expansionsverhalten des Kältemittel/Kompressoröl-gemischs beim Warten von Fahrzeugklimaanlagen unterschiedlicher Bauart oder unterschiedlicher Einbauzustände nur schwer miteinander vergleichbar waren. Durch die Erfindung werden auch solche Kältemittelteilmengen beim Warten der Fahrzeugklimaanlage erfasst, die in der Vergangenheit nicht in Betracht gezogen worden sind. Erst die erfindungsgemäße Kombination der Restentleerung des Kältemittelkreislaufsystems mittels Vakuumpumpe mit nachfolgender Weiterverarbeitung der Restgase in der Trennstufe fördert tiefere Einblicke über den Zustand der Fahrzeugklimaanlage zu Tage. Durch die Erfindung wird auch ein Beitrag zum Umweltschutz und/oder zur Gerätesicherheit und Arbeitssicherheit geleistet, denn es entsteht ein hinsichtlich des Kältemittels geschlossenes WartungsSystem, so dass umweltschädliche Kältemittel, oder solche Kältemittel, die explosions- oder brandgefährdet sind, sicher ausgeschleust werden können.

Die Einsatzmöglichkeiten der Erfindung beschränken sich aber nicht auf Standardwartungsarbeiten an Fahrzeugklimaanlagen sondern gestatten auch Verbesserungen im Falle von Reparaturarbeiten. Wenn bei bekannten Servicegeräten für Fahrzeugklimaanlagen in der Vergangenheit größere Kältemittelfehlmengen festgestellt wurden, löste dies automatisch umfangreiche und arbeitsaufwendige Lecksucharbeiten aus, die so zu sagen rein auf Verdacht notwendig erschienen. Wegen der bauartbedingten großen Unterschiede verschiedener Fahrzeugklimaanlagen und der nur geringen Diagnosegenauigkeit musste in der Vergangenheit auch dann nach Leckagen gesucht werden, wenn, wie durch die Erfindung erkannt wurde, bisweilen auch gar keine Leckagen vorlagen, sondern lediglich die expansionsbedingte Selbstentleerung des Kältemittel-Kreislaufsystems der Fahrzeugklimaanlage nur unzureichend war.

Um die Diagnosegenauigkeit noch weiter zu erhöhen, wird vorgeschlagen, einen dem Separator nachgeschalteten Behälter für aus dem Kreislaufgemisch separierte flüssige Bestandteile, wie Kompressoröl, zeitweise mit der Saugseite der Vakuumpumpe fluidisch zu verbinden und in diesem Behälter anfallende, nicht kondensierte Gasvolumina der Trennstufe erneut zuzuführen. Auf diese Weise können mit dem alten Kompressorenöl aus dem Separator gemeinsam ausgeschleuste sowie in dem Kompressorenöl etwa noch gelöste Kältemittelrestmengen ebenfalls erfasst werden. Die Umschaltung kann u.a. durch den in dem Behälter entstehenden Druck ausgelöst werden.

Um nicht kondensierte und nicht kondensierbare Bestandteile der durch die Vakuumpumpe aus dem Kältemittel-Kreislaufsystem der Fahrzeugklimaanlage abgezogenen Restgase aus der Trennstufe entfernen zu können, kann vorgesehen sein, den wägbaren Vorratsbehälter für separiertes Kältemittel gezielt zu entlüften. In einem solchen Vorratsbehälter liegt das abgetrennte Kältemittel in der Regel in verflüssigter Form vor und die unter den vorherrschenden Druck- und Temperaturbedingungen nicht kondensierten Gase oberhalb des Kältemittel-Flüssigkeitsspiegels können auch geringe Kältemittelrestmengen auf weisen. Ein taktweise und/oder druckgesteuertes Vermindern des Gasdruckes in dem Vorratsbehälter ist in der Regel unbedenklich. Wenn in dem Vorratsbehälter aufgrund der herrschenden Druck- und Temperaturverhältnisse hingegen, nennenswerte Restmengen an Kältemittel in der Gasphase anfallen, ist es möglich, diese über die Vakuumpumpe oder aufgrund des Innendruckes erneut durch die Trennstufe zu führen. Größter Bestandteil der nichtkondensierbaren Gase in dem Vorratsbehälter ist in der Regel Luft, die z.B. bei Leckagen der Fahrzeugklimaanlage im Kältemittel-Kreislaufsystem eingeschlossen sein kann, und bei der Wartung freigesetzt wird.

Sollte das Servicegerät für ein Wiederbefüllen einer zuvor reparierten Fahrzeugklimaanlage eingesetzt werden, so enthält das Kreislaufsystem der Fahrzeugklimaanlage in diesem Zustand in der Regel nur Luft. In diesem Fall kann die Druckseite der Vakuumpumpe an der Trennstufe vorbei z.B. mit der Atmosphäre verbunden werden.

In der ersten Wartungsphase liegt der Systemdruck des Kältemittelkreislaufsystems der Fahrzeugklimaanlage in der Regel oberhalb von einem bar absolut, so dass der Kältemittelverdichter der Trennstufe gasförmiges Kältemittel ohne wesentliche Saugleistung zugefördert bekommt. Übliche Kältemittelverdichter sind aber in der Lage, auch einen gewissen Saugdruck zu erzeugen. Es hat sich als vorteilhaft erwiesen, durch den Kältemittelverdichter der Trennstufe einen bescheidenen Unterdruck in der Größenordnung von etwa 0,7 bar absolut in dem Kältemittel-Kreislaufsystem der Fahrzeugklimaanlage bzw. an dessen Ausgängen zu erzeugen und erst nachfolgend auf die zweite Wartungsphase umzuschalten, in der die Restentleerung des Kältemittelkreislaufsystems der Fahrzeugklimaanlage mittels Vakuumpumpe erfolgt, wobei ein Druck in der Größenordnung von etwa 1mbar absolut angestrebt wird. Wenn der Kältemittelverdichter nicht in der Lage ist, einen gewissen Unterdruck zu erzeugen, sondern auf seiner Eingangsseite der Druck bei etwa 1 bar bzw. Umgebungsdruck verharrt, so ist dies ein Anzeichen einer Systemleckage in Folge dessen nur noch Luft angesaugt wird. In diesen Fällen wird die erste Wartungsphase beendet und der Verdichter abgeschaltet. Das Gleiche gilt sinngemäß für die Vakuumpumpe.

Die Vakuumpumpe verträgt auf ihrer Druckseite nur moderate Überdrücke von z.B. 2 bar absolut. Wenn durch die mit dem Kältemittelverdichter fluidisch in Reihe geschaltete Vakuumpumpe relativ große Gasmengen pro Zeiteinheit fördert, was insbesondere am Anfang der Restentleerung des Kältemittel-Kreislaufsystems der Fahrzeugklimaanlage der Fall ist, so erfolgt eine Abstimmung der Vakuumpumpe auf den Kältemittelverdichter in der Weise, dass der Gasdruck zwischen der Druckseite der Vakuumpumpe und der Saugseite des Kältemittelverdichters gemessen und die Vakuumpumpe bei Erreichen eines festgelegten Höchstdruckes zeitweise abgeschaltet wird, bis der an der Saugseite des Verdichters anstehende Druck wieder ein niedrigeres, d.h. verträgliches Niveau erreicht hat. Die Vakuumpumpe wird dann wieder zugeschaltet. Ein typischer Grenzdruck, der zum Abschalten der Vakuumpumpe führt, sind 2 bar absolut. Ein typischer Druck für das Wiedereinschalten der Vakuumpumpe nach vorangehendem druckbedingtem Abschalten kann in der Größenordnung von 0,7 bar absolut liegen.

Um den Kältemittelverdichter vor Beschädigungen zu schützen, wird das in der ersten Wartungsphase aus der Fahrzeugklimaanlage abströmende Kältemittelkompressorölgemisch zunächst aufgeheizt, um das Kältemittel zu verdampfen und zu verhindern, dass noch flüssiges Kältemittel in dem Kältemittelverdichter gelangt. Zu diesem Zweck ist ein Wärmeaustauscher vorgesehen. Dieser kann zum Aufheizen die Kompressionswärme des Kältemittelverdichters nutzen, denn das gasförmige Kältemittel, dass dem Kältemittelverdichter zuströmt, wird durch die Verdichtung ohne zu kondensieren erheblich aufgeheizt.

Der Wärmeaustausch zwischen komprimiertem und frisch abgeströmten Kältemittel kann in einem separaten Wärmeaustauscher bekannter Bauart erfolgen. Als besonders vorteilhaft hat sich eine Kombination von Kompressorölseparator und Wärmeaustauscher erwiesen. Hierzu strömt das zum Teil noch flüssige Kältemittel in einem Separatorbehälter ein, in dessen Innenraum sich mindestens ein Wärmeaustauschrohr befindet, das von dem komprimierten, z.B. unter einem Druck bis zu 19 bar stehenden gasförmigen Kältemittel durchströmt wird. Auf diese Weise erfolgt die Schwerkrafttrennung des Kompressoröls bei gleichzeitiger Kältemittelverdampfung in ein und demselben Aggregat. Vorzugsweise ist der Wärmeaustauscher als Doppelmantelgefäß ausgeführt und wird von dem komprimierten Kältemittel durchströmt, insbesondere nachdem dieses zuvor den Wärmeaustauscher im Innenbehälter durchströmt hat. Durch diesen Wärmeaustausch steigt im Ölseparator der Kältemitteldruck - zumindest wenn der Verdichter z.B. kurzzeitig ausgeschaltet wird. Dieser Druck kann dazu genutzt werden, Altöl in den Vorratsbehälter abzulassen. Dabei können geringe Kältemittelmengen gasförmig ebenfalls in den Altölbehälter gelangen, die durch kurzzeitiges Anschließen des Altölbehälters an die Vakuumpumpe aber wieder abgesaugt werden. Das Kältemittel wird mithin in einem so gut wie vollständig geschlossenem System gehalten.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Service-Gerätes für Fahrzeugklimaanlagen dargestellt ist. Auch einzelne Merkmale der Ansprüche oder der Ausführungsformen können mit anderen Merkmalen anderer Ansprüche und Ausführungsformen kombiniert werden.

### DETAILLIERTE BESCHREIBUNG VON AUSFÜHRUNGSBEISPIELEN

Aus dem Blockschaltbild ergibt sich der Grundaufbau eines Service-Gerätes für Fahrzeugklimaanlagen. Demnach sind Service-Anschlussverbinder 109A, 109B zum Anschluss an den Kühlmittel-/Kompressionskreislauf einer Fahrzeugklimaanlage (hier nicht dargestellt) vorgesehen, um diese zu warten, insbesondere zu entleeren und wiederzubefüllen. Über Druckschläuche 111A, 111B besteht eine fluidische Verbindung zu einem ersten Umschalt-Ventilblock 130, dessen Funktion weiter unten erklärt wird. Der Umschalt-Ventilblock 130 ist zum Einen mit einer rechts im Bild dargestellten Trennstufe 140, die weiter unten erklärt wird, und zum Anderen (links unten im Bild) mit einer Vakuumeinheit 150, die ebenfalls weiter unten erklärt werden wird, fluidisch verbunden. Ein Niederdruckmanometer 126A und ein Hochdruckmanometer 126B am Umschalt-Ventilblock 130 dienen unter anderem der Zustands- und Funktionskontrolle des Kühlmittel-Kompressorölkreislaufes der Fahrzeugklimaanlage. Des Weiteren ist der Umschalt-Ventilblock 130 an ein Wiederauffüllsystem 119 für Kompressoröl und Additive fluidisch angeschlossen, mit Wägeeinrichtungen 117C und 117D für Spender 119C, 119D, zum Beispiel für ein Lecksuchadditiv respektive für Frischöl. Der Systemdruck innerhalb des Umschalt-Ventilblocks 130, der nach beginnender Entleerung des Fluidkreislaufes für die Systemsteuerung, die weiter unten erklärt wird, von Bedeutung ist, wird über einen mit einer Sammelleitung des Umschalt-Ventilblocks 130 verbundenen Drucksensor 131 überwacht, so dass der Anlagendruck, insbesondere der Kältemitteldruck der Fahrzeugklimaanlage überwacht wird, so dass unter anderem die nachfolgend erläuterten Kreislaufsysteme (Trennstufe 140 und Vakuumeinheit 150 bzw. zugehörige Ventilschaltungen) gesteuert werden können. Innerhalb des Umschalt-Ventilblocks 130 sind die dem Kreislauf der Trennstufe 140 zuzuordnenden Leitungen punktiert dargestellt. Demgegenüber sind die der Vakuumeinheit 150 zuzuordnenden Leitungen strichpunktiert dargestellt, um nachfolgend die Arbeitsphasen des Systems besser unterscheiden zu können.

Die Funktionsweise der Trennstufe 140 ist die Folgende: Nach Anschließen der Service-Anschlussverbinder 109A, 109B an die entsprechenden Ports der Fahrzeugklimaanlage und Freigabe der entsprechenden Ventile LP, HP, CX₂ des Umschalt-Ventilblocks 130, steht der Systemdruck der Fahrzeugklimaanlage zur Verfügung, um einen ersten Teil des Inhalts des Kältemittelkompressorölkreislaufes der Fahrzeugklimaanlage in die Trennstufe 140 zu überführen. Dieser Systemdruck beträgt bei 0°C bereits etwa 3 bar absolut und liegt bei etwa 20°C bereits in einer Größenordnung von 6 bar absolut, so dass die Förderung von Kältemittel-Kompressorölgemisch in die Trennstufe140 zunächst sogar selbsttätig erfolgt. Im Übrigen wird diese Förderung durch Betreiben des Verdichters 112, wie weiter unten erläutert, unterstützt und später bei abfallendem Systemdruck weiter in Gang gehalten. Von dem Umschalt-Ventilblock 130 gelangt das Kältemittelkompressorölgemisch über einen Grobfilter 114 und ein auf etwa 3,5 bar absolut eingestelltes Konstantdruckventil 141 in einen Doppelmantelwärmeaustauscher 142, und zwar in dessen Innenbehälter 142A. Dort werden die flüchtigen Komponenten verdampft und die Gasphase gelangt über eine Leitung 146A in einen Gastrockner 146 und von dort in den Verdichter 112.

Der Doppelmantelwärmeaustauscher 142 dient gleichzeitig als Separator für flüssige Bestandteile des Kältemittel-Kompressorölgemisches, hier handelt es sich im Kern um das Kompressoröl, gegebenenfalls enthaltene Additive sowie im Kompressoröl noch gebundene Restmengen des Kältemittels. Diese Flüssigphase wird über ein Ölablassventil 116A einem Altölbehälter 116 zugeführt. Die anfallenden Mengen können über eine Wägeeinrichtung 117A, welche den Behälter mitwiegt, registriert werden.

Der Verdichter 112 sorgt dafür, dass das Kältemittel an seiner Ausgangsseite auf einen Druck von bis zu z.B. 19 bar absolut komprimiert wird. Ein Kompressornotausventil 112A begrenzt den Druck in der Regel auf 19 bar. Da das Schmieröl des Verdichters auch in das komprimierte Kältemittel gelangt, wird dieses in einem Ölseparator 112B abgetrennt und über ein Kapillarrohr 112C, das wie eine Druckdrossel wirkt, der Schmierung des Verdichters 112 wieder zugeführt. Über ein Magnetventil 112D gelangt das komprimierte, getrocknete und von Kompressoröl sowie Additiven befreite Kältemittel in eine Heizwendel 142C, die sich im Gasraum des Innenbehälters 142A des Doppelmantelwärmeaustauschers 142 befindet. Hierdurch kann die im komprimierten Kältemittel enthaltene Kompressionswärme abgegeben werden, um auf der Kaltseite das aus der Fahrzeugklimaanlage frisch ankommende Kältemittel/Kompressorölgemisch so weit wie möglich zu verdampfen. Aus der Heizwendel 142C gelangt das gereinigte (recycelte) Kältemittel zunächst in den Außenmantelbereich (Außenbehälter 142B) des Doppelmantelwärmeaustauschers 142 und von dort über einen Ventilblock 142D und einen Verbindungsschlauch 129 zum Kältemittelvorrat 115 (Vorratsbehälter). Der Vorratsbehälter wird samt Inhalt von einer Wägeeinrichtung 117B gewogen. Der Vorratsbehälter trägt auch einen Kältemittelverflüssiger 115A, der vorteilhafter Weise mit gewogen wird und in dem das unter Kompressionsdruck stehende Kältemittel kondensiert wird, um in flüssiger Form in den Kältemittelvorrat 115 zu gelangen. Sowohl der Separator 112B als auch der Kältemittelvorrat 115 sind als so genannte Druckbehälter ausgelegt. Der Druck im Kältemittelvorrat 115 wird über ein Ventil 115B gegen Überdruck gesichert, denn die sich oberhalb des Flüssigkeitsspiegels ausbildende Gasphase nicht kondensierbarer Gase muss aus Sicherheitsgründen ab einem bestimmten Überdruck von z.B. 16 bar geregelt abgelassen werden. Dies kann auch nicht automatisch über eine Handhabe 115C durch eine Bedienperson erfolgen.

Das flüssige Kältemittel gelangt über ein Rückschlagventil 115D und ein Steigrohr 115E in den Flüssigbereich des Kältemittelvorrat 115. Um die Fahrzeugklimaanlage mit Kältemittel wiederbefüllen zu können, gelangt flüssiges Kältemittel über das Steigrohr 115E, ein Ventil 115F und eine Verbindungsleitung 115G zurück in den Umschalt-Ventilblock 130.

Sobald die Fahrzeugklimaanlage soweit entleert ist, dass der Verdichter 112 auf seiner Niederdruckseite nicht mehr genügend Kältemittel-/Kompressorölgemisch ansaugen kann, was z.B. bei einem Druck 0,7 bar absolut der Fall sein kann, wird die Vakuumeinheit 150 durch Betätigen der entsprechenden Ventile in Gang gesetzt. So werden weitere Gasbestandteile aus dem Fluidkreislauf der Fahrzeugklimaanlage über die Sammelleitung des Umschalt-Ventilblocks 130 durch die Vakuumpumpe 113 angesaugt. Von der Ausgangsseite der Vakuumpumpe 113 gelangt dieses Gas oder Gasgemisch über einen (zweiten) Umschalt-Ventilblock 151 und Magnetventile VC2 zurück zum Umschalt-Ventilblock 130 und von dort in die Verbindungsleitung 143, die den Umschalt-Ventilblock 130 an die Trennstufe 140 fluidisch ankoppelt. Die von der Vakuumpumpe 113 geförderten Gasmengen aus der Fahrzeugklimaanlage werden nun in der Trennstufe 140, einschließlich Wägung, genauso behandelt, wie dies bei Beginn des Entleerungsprozesses an selbstständig bzw. durch den Verdichter 112 angesaugt aus der Fahrzeugklimaanlage austretenden Mengen von Kältemittel-/Kompressorölgemisch geschieht. Der Unterschied zu der ersten Phase, hier als Abströmphase bezeichnet, besteht darin, dass aus der Fahrzeugklimaanlage aufgrund der vorangehenden durch den Verdichter 112 unterstützten Abströmphase keine flüssigen Bestandteile, also im wesentlichen gasförmiges Kältemittel oder ggf. Luft aus der Fahrzeugklimaanlage angesaugt werden. Dabei sind zunächst relativ große Gasmengen zu bewältigen, während gegen Ende der zweiten Phase, hier als Evakuierphase bezeichnet, die Gasmengen deutlich geringer werden. Bei einem Eingangsdruck von etwa 1mbar oder nach Ablauf einer fest voreingestellten Prozesszeit wird der Evakuierprozess beendet.

Der von der Vakuumpumpe 113 erzeugte Gasdruck auf ihrer Ausgangsseite sollte eine Größenordnung von 2 bar absolut nicht überschreiten, um die Vakuumpumpe 113 nicht zu schädigen. Zur Druckkontrolle ist dem der Vakuumpumpe nachgeschaltete Umschalt-Ventilblock 151 ein Druckschalter 151A zugeordnet, mit dessen Hilfe, die Vakuumpumpe 113 bei Überschreiten eines Ausgangsdruckes von z.B. 2 bar abschaltet, bis der Ausgangsdruck wieder entsprechend abgesunken ist, so dass die Vakuumpumpe 113 wieder zugeschaltet werden kann.

Da das Service-Gerät nicht nur für das Absaugen und Wiederbefüllen der Fahrzeugklimaanlage im normalen Wartungsbetrieb genutzt wird, sondern auch für Reparaturfälle an Klimaanlagen, z.B. Komponentenaustausch, ist der der Vakuumpumpe 113 nachgeschaltete Umschalt-Ventilblock 151 mit einem Ablassventil VC₃ ausgestattet, das z.B. in die Atmosphäre führen kann. Wenn also aus der reparierten Fahrzeugklimaanlage für nachfolgendes Wiederbefüllen lediglich Luft abgesaugt wird, gelangt diese nicht in die Trennstufe140.

**BEZUGSZEICHENLISTE**

| | | | |
|---|---|---|---|
| 1 | Kompressor | 26A | Niederdruckmanometer |
| 2 | Verdampfer | 26B | Hochdruckmanometer |
| 3 | Verflüssiger | 119 | Wiederauffüllsystem |
| 4A-C | Rohrleitungen | 109A | Service-Anschlussverbinder |
| 5 | Abscheider | 109B | Service-Anschlussverbinder |
| 6A/B | Serviceanschlüsse | 111A | Druckschläuche |
| 7 | Kaltluftgebläse | 111B | Druckschläuche |
| 8 | Warmluftgebläse | 112 | Verdichter |
| 9A/B | Service-Anschlussverbinder | 112A | Kompressornotausventil |
| 10 | Fahrzeugklimaanlage | 112B | Ölseparator |
| 11A/B | Druckschläuche | 112C | Kapillarrohr |
| 12 | Absaugpumpe | 112D | Magnetventil |
| 13 | Vakuumpumpe | 113 | Vakuumpumpe |
| 14 | Separator | 114 | Grobfilter |
| 15 | Kältemittelvorrat | 115 | Kältemittelvorrat |
| 15A | Kältemittelverflüssiger | 115A | Kältemittelverflüssiger |
| 16 | Altölbehälter | 115B | Ventil |
| 17A-J | Wägeeinrichtungen | 115C | Hanhabe |
| 18 | Entlastungseinrichtung | 115D | Rückschlagventil |
| 19 | Wiederauffüllsystem | 115E | Steigrohr |
| 19A | Steuereinheit mit Ventilblock | 115F | Ventil |
| 19B | Steuerleitungen | 115G | Verbindungsleitung |
| 19C | Vorratsbehälter | 116 | Altölbehälter |
| 19D | Vorratsbehälter | 116A | Ölablassventil |
| 19E | Fernanzeige | 117A | Wägeeinrichtung |
| 19F' | Dosier- und Ventileinheit | 117B | Wägeeinrichtung |
| 19F" | Dosier- und Ventileinheit | 117C | Wägeeinrichtung |
| 19F"' | Dosier- und Ventileinheit | 117D | Wägeeinrichtung |
| 20 | Service-Gerät | 119 | Wiederauffüllsystem |
| 119C | Spender | 142A | Innenbehälter |
| 119D | Spender | 142B | Außenbehälter |
| 126A | Niederdruckmanometer | 142C | Heizwendel |
| 126B | Hochdruckmanometer | 142D | Ventilblock |
| 129 | Verbindungsschlauch | 143 | Verbindungsleitung |
| 130 | erster Umschalt-Ventilblock | 146 | Gastrockner |
| 131 | Drucksensor | 146A | Leitung |
| 140 | Trennstufe | 150 | Vakuumeinheit |
| 141 | Konstantdruckventil | 151 | zweiter Umschalt-Ventilblock |
| 142 | Doppelmantel-Wärmeaustauscher | 151A | Druckschalter |

## Patentansprüche

1. Verfahren zum Warten einer mit geschlossenem Kühlmittel-Kreislaufsystem betriebenen Fahrzeugklimaanlage, bei dem
in einer ersten Wartungsphase ein Kreislaufgemisch aus Kältemittel, Kompressorenöl sowie gegebenenfalls weiteren Gemischbestandteilen aus einer Fahrzeugklimaanlage in eine Trennstufe mittels eines einen gewissen Saugdruck erzeugenden Kältemittelverdichters über einen Separator bis zu einem bescheidenen Unterdruck abgesaugt und dabei Kältemittel mittels des Separators von dem abgesaugten Kreislaufgemisch getrennt, komprimiert und aufgefangen sowie seine Menge bestimmt wird und bei dem in einer zweiten Wartungsphase das Kältemittel-Kreislaufsystem der Fahrzeugklimaanlage mittels einer Vakuumpumpe weitgehend restentleert wird,
**dadurch gekennzeichnet, dass**
in der zweiten Wartungsphase abgepumpte Restgase mittels des Kältemittelverdichters durch die Trennstufe geleitet werden und die Menge des dabei aufgefangenen Kältemittelrestes bestimmt wird.

2. Verfahren nach Anspruch 1, **dadurch gekennzeichnet, dass** ein dem Separator nachgeschalteter Behälter für aus dem Kreislaufgemisch separierte flüssige Bestandteile zeitweise mit der Saugseite der Vakuumpumpe fluidisch verbunden wird und in diesem Behälter anfallende nicht kondensierten Gasvolumina der Trennstufe erneut zugeführt werden.

3. Verfahren nach Anspruch 2, **dadurch gekennzeichnet, dass** die Umschaltung auf den Absaugbetrieb durch den in dem nachgeschalteten Behälter entstehenden Druck ausgelöst wird.

4. Verfahren nach einem der Ansprüche 1 bis 3, **dadurch gekennzeichnet, dass** ein Wägebehälter der Trennstufe für separiertes Kältemittel druck-überwacht und nicht kondensierbares und nicht kondensiertes Gas gezielt abgelassen wird.

5. Verfahren nach Anspruch 4, **dadurch gekennzeichnet, dass** aus dem Wägebehälter abgelassene Gase der Trennstufe wieder zugeführt werden.

6. Verfahren nach einem der Ansprüche 1 bis 5, **dadurch gekennzeichnet, dass** von der Vakuumpumpe angesaugte, kältemittelfreie oder von Kältemittel weitgehend freie Gasvolumina an der Trennstufe vorbeigeleitet werden.

7. Verfahren nach Anspruch 6, **dadurch gekennzeichnet, dass** die Trennstufe umgangen und/oder der Verdichter abgeschaltet wird, wenn die Vakuumpumpe und/oder der Verdichter voreingestellte Drücke nicht erreicht.

8. Verfahren nach einem der Ansprüche 1 bis 7, **dadurch gekennzeichnet, dass** die Umschaltung von der ersten in die zweite Wartungsphase bei Erreichen eines voreingestellten Saugdruckes erfolgt, den der Verdichter erzeugt.

9. Verfahren nach einem der Ansprüche 1 bis 8, **dadurch gekennzeichnet, dass** die Vakuumpumpe in der zweiten Wartungsphase in Abhängigkeit des von ihr auf ihrer Druckseite erzeugten Gasdruckes zeitweise abgestellt wird, während der Verdichter der Trennstufe weiterläuft.

10. Service-Gerät für Fahrzeugklimaanlagen,
mit einer Entleer- und einer Befülleinrichtung zum Absaugen des Kältemittel-/Kompressoröl-Gemisches aus dem Kältemittel-Kreislaufsystem einer Fahrzeugklimaanlage und zum Wiederauffüllen der Fahrzeugklimaanlage mit Kältemittel und Kompressoröl mit einer mindestens einen Separator, einen einen gewissen Saugdruck erzeugenden Kältemittelverdichter (112) und eine Kältemittelwägeeinrichtung (117B) umfassenden Trennstufe (140) und mit einer Vakuumpumpe (113) zum Restentleeren des Kältemittel-Kreislaufsystems der Fahrzeugklimaanlage, bei der in einer ersten Wartungsphase das Kreislaufgemisch aus Kältemittel, Kompressorenöl sowie gegebenenfalls weiteren Gemischbestandteilen aus der Fahrzeugklimaanlage in die Trennstufe (140) mittels des Kältemittelverdichters (112) über den Separator bis zu einem bescheidenen Unterdruck abgesaugt und dabei Kältemittel mittels des Separators von dem abgesaugten Kreislaufgemisch getrennt, komprimiert und aufgefangen sowie seine Menge bestimmt wird und bei der
in einer zweiten Wartungsphase das Kältemittel-Kreislaufsystem der Fahrzeugklimaanlage mittels der Vakuumpumpe (113) weitgehend restentleert wird,
**gekennzeichnet durch**
mindestens einen druck- und/oder zeitgesteuerten Umschalt-Ventilblock (130; 151) zum wahlweisen direkten fluidischen Durchverbinden des Kältemittel-Kreislaufsystems mit der Trennstufe (140) während der ersten Wartungsphase und zum Umleiten der Strömungsverbindung vom Kältemittel-Kreislaufsystems der Fahrzeugklimaanlage über die Vakuumpumpe (113) zur Trennstufe (140) während der zweiten Wartungsphase, so dass in der zweiten Wartungsphase abgepumpte Restgase mittels des Kältemittelverdichters (112) durch die Trennstufe (140) geleitet werden und die Menge des dabei aufgefangenen Kältemittelrestes bestimmt wird.

11. Service-Gerät nach Anspruch 10, **dadurch gekennzeichnet, dass** der Separator als Wärmetauscher gestaltet ist in dem Kompressionswärme des Verdichters (112) Verdampfungswärme für frisch abgeströmtes Kältemittel liefert.

12. Service-Gerät nach Anspruch 10 oder 11, **dadurch gekennzeichnet, dass** der Separator als Doppelmantel-Wärmeaustauscher (142) gestaltet ist, bei dem komprimiertes Kältemittel durch ein geschlossenes System aus mindestens einem Wärmeaustauscherrohr (142C) in einen Innenbehälter (142A) und einen Außenbehälter (142B) des Doppelmantel-Wärmeaustauschers (142) geleitet wird.

13. Service-Gerät nach einem der Ansprüche 10 bis 12, **dadurch gekennzeichnet, dass** der mindestens eine Umschalt-Ventilblock (130; 151) mit einem an eine Sammelleitung für Kältemittel-/Kompressorölgemisch angeschlossenen Drucksensor (131) zum Umsteuern der Ventile von ihrer Stellung in der ersten Wartungsphase in ihre Stellung in der zweiten Wartungsphase versehen ist.

14. Service-Gerät nach einem der Ansprüche 10 bis 13, **dadurch gekennzeichnet, dass** der mindestens eine Umschalt-Ventilblock (130; 151) mit einem an die Verbindungsleitung zwischen der Druckseite der Vakuumpumpe (113) und der Saugseite des Verdichters (112) angeschlossenen Druckschalter (151A) zum druckgesteuerten Ab- und Zuschalten der Vakuumpumpe (113) in der zweiten Wartungsphase versehen ist.

## Claims

1. Method for servicing a vehicle air conditioning system operated with a closed coolant circulatory system, in which
in a first servicing phase a circulation mixture of coolant, compressor oil and optionally other mixture components is removed by suction from a vehicle air conditioning system into a separating stage by a coolant compressor producing a certain suction pressure via a separator up to a moderate vacuum and during which coolant is separated by the separator from the circulation mixture removed by suction, compressed and trapped and its amount determined, and in which in a second servicing phase the coolant circulation system of the vehicle air conditioning system is largely emptied of residue by a vacuum pump,
**characterized by that**
residual gases pumped off in the second servicing phase are conducted by the coolant compressor through the separating stage and the amount of the coolant residue trapped in this process is determined.

2. Method according to Claim 1, **characterized by that** a container connected in downstream from the separator and for liquid components separated out of the circulation mixture is periodically fluidically connected to the suction side of the vacuum pump and non-condensed gas volumes accumulating in this container are resupplied to the separation stage.

3. Method according to Claim 2, **characterized by that** the switching to the suction removal operation is initiated by the pressure arising in the container connected in downstream.

4. Method according to one of Claims 1 to 3, **characterized by that** a weighing container of the separation stage for separated coolant is monitored by pressure and non-condensable and non-condensed gas is purposefully let off.

5. Method according to Claim 4, **characterized by that** gases let off from the weighing container are returned to the separation stage.

6. Method according to one of Claims 1 to 5, **characterized by that** gas volumes which are sucked in by the vacuum pump, or free of coolant or largely free of coolant are conducted past the separation stage.

7. Method according to Claim 6, **characterized by that** the separation stage is bypassed and/or the compressor is turned off if the vacuum pump and/or the compressor does/do not reach previously set pressures.

8. Method according to one of Claims 1 to 7, **characterized by that** the switching from the first into the second servicing phase takes place upon reaching a previously set suction pressure which the compressor generates.

9. Method according to one of Claims 1 to 8, **characterized by that** the vacuum pump in the second servicing phase is periodically turned off as a function of the gas pressure generated by it on its pressure side whereas the compressor of the separation stage continues to run.

10. Service device for vehicle air conditioning systems,
with an emptying device and a filling device for removing the mixture of coolant/compressor oil by suction from the coolant circulation system of a vehicle air conditioning system and for refilling the vehicle air conditioning system with coolant and compressor oil with at least one separator, one coolant compressor (112) generating a certain suction pressure and a separating stage (140) comprising a coolant weighing device (117B) and with a vacuum pump (113) for the residual emptying of the coolant circulation system of the vehicle air conditioning system, in which in a first servicing phase the circulation mixture consisting of coolant, compressor oil and optionally other mixture components is removed by suction from the vehicle air conditioning system into the separation stage (140) by the coolant compressor (112) via the separator up to a moderate vacuum and during which coolant is separated by the separator from the circulation mixture removed by suction and is compressed, trapped and its amount determined, and in which in a second servicing phase the coolant circulation system of the vehicle air conditioning system is largely emptied of residue by the vacuum pump (113), **characterized by**
at least one pressure-controlled and/or time-controlled switching valve block (130; 151) for the selective, direct fluidic through-connecting of the coolant circulation system to the separation stage (140) during the first servicing phase and for diverting the flow connection from the coolant circulation system of the vehicle air conditioning system via the vacuum pump (113) to the separation stage (140) during the second servicing phase, so that residual gases pumped off in the second servicing phase are conducted by the coolant compressor (112) through the separation stage (140) and the amount of the coolant residue trapped is determined.

11. Service device according to Claim 10, **characterized by that** the separator is designed as a heat exchanger in which compression heat of the compressor (112) supplies evaporation heat for coolant which freshly flowed off.

12. Service device according to Claim 10 or 11, **characterized by that** the separator is designed as a double-jacketed heat exchanger (142) in which compressed coolant is conducted through a closed system consisting of at least one heat-exchanger tube (142C) into an inner container (142A) and an outer container (142B) of the double-jacketed heat exchanger (142).

13. Service device according to one of Claims 10 to 12, **characterized by that** the at least one switching valve block (130; 151) is provided with a pressure sensor (131) connected to a collection line for coolant mixture/compressor oil mixture for changing over the valves from their position in the first servicing phase into their position in the second servicing phase.

14. Service device according to one of Claims 10 to 13, **characterized by that** the at least one switching valve block (130; 151) is provided with a pressure switch (151A) connected to the connection line between the pressure side of the vacuum pump (113) and the suction side of the compressor (112) for the pressure-controlled turning on and off of the vacuum pump (113) in the second servicing phase.

## Revendications

1. Procédé pour entretenir un système de climatisation de véhicule exploité avec un système de circuit de fluide frigorigène fermé, dans lequel
dans une première phase d'entretien, un mélange en circulation constitué de fluide frigorigène, d'huile de compresseur et le cas échéant d'autres composants de mélange est aspiré hors d'un système de climatisation de véhicule dans un étage séparateur au moyen d'un compresseur frigorifique générant une certaine pression d'aspiration par le biais d'un séparateur jusqu'à une pression subatmosphérique modérée et du fluide frigorigène est alors séparé du mélange en circulation aspiré au moyen du séparateur, comprimé et recueilli, et sa quantité est déterminée, et dans lequel,
dans une seconde phase d'entretien, le système de circuit de fluide frigorigène du système de climatisation de véhicule est en grande partie vidé de ses résidus au moyen d'une pompe à vide,
**caractérisé en ce que**
des gaz résiduels pompés dans la seconde phase d'entretien sont guidés au moyen du compresseur frigorifique à travers l'étage séparateur et la quantité du résidu de fluide frigorigène alors recueilli est déterminée.

2. Procédé selon la revendication 1, **caractérisé en ce qu'**un contenant placé en aval du séparateur pour des composants liquides séparés du mélange en circulation est temporairement relié de manière fluidique au côté aspiration de la pompe à vide et des volumes de gaz non condensés apparaissant dans ce contenant sont de nouveau alimentés dans l'étage séparateur.

3. Procédé selon la revendication 2, **caractérisé en ce que** la commutation en mode d'aspiration est déclenchée par la pression survenant dans le contenant placé en aval.

4. Procédé selon l'une des revendications 1 à 3, **caractérisé en ce que** la pression d'un contenant de pesage de l'étage séparateur pour fluide frigorigène séparé est surveillée et du gaz non condensable et non condensé est évacué de manière ciblée.

5. Procédé selon la revendication 4, **caractérisé en ce que** des gaz évacués du contenant de pesage sont de nouveau alimentés dans l'étage séparateur.

6. Procédé selon l'une des revendications 1 à 5, **caractérisé en ce que** des volumes de gaz aspirés par la pompe à vide, sans fluide frigorigène ou en grande partie sans fluide frigorigène sont guidés sans passer par l'étage séparateur.

7. Procédé selon la revendication 6, **caractérisé en ce que** l'étage séparateur est contourné et/ou le compresseur est arrêté, quand la pompe à vide et/ou le compresseur n'atteignent pas des pressions préréglées.

8. Procédé selon l'une des revendications 1 à 7, **caractérisé en ce que** la commutation de la première à la seconde phase d'entretien est effectuée lorsqu'une pression d'aspiration préréglée, générée par le compresseur, est atteinte.

9. Procédé selon l'une des revendications 1 à 8, **caractérisé en ce que** la pompe à vide est temporairement arrêtée dans la seconde phase d'entretien en fonction de la pression de gaz générée par celle-ci sur son côté refoulement, pendant que le compresseur de l'étage séparateur continue à fonctionner.

10. Appareil d'entretien pour systèmes de climatisation de véhicule, comprenant un dispositif de vidange et de remplissage destiné à aspirer le mélange fluide frigorigène / huile de compresseur hors du système de circuit de fluide frigorigène d'un système de climatisation de véhicule et à remplir de nouveau le système de climatisation de véhicule avec du fluide frigorigène et de l'huile de compresseur, un étage séparateur (140) doté d'au moins un séparateur, d'un compresseur frigorifique (112) générant une certaine pression d'aspiration et d'un dispositif de pesage de fluide frigorigène (117B), et une pompe à vide (113) destinée à vider les résidus du système de circuit de fluide frigorigène du système de climatisation de véhicule, pour lequel, dans une première phase d'entretien, le mélange en circulation constitué de fluide frigorigène, d'huile de compresseur et le cas échéant d'autres composants de mélange est aspiré hors du système de climatisation de véhicule dans l'étage séparateur (140) au moyen du compresseur frigorifique (112) par le biais du séparateur jusqu'à une pression subatmosphérique modérée, et du fluide frigorigène est alors séparé du mélange en circulation aspiré au moyen du séparateur, comprimé et recueilli, et sa quantité est déterminée et pour lequel,
dans une seconde phase d'entretien, le système de circuit de fluide frigorigène du système de climatisation de véhicule est en grande partie vidé de ses résidus au moyen de la pompe à vide (113),
**caractérisé par**
au moins un bloc de soupapes d'inversion (130 ; 151) actionné par pression et/ou de manière temporisée pour, au choix, la liaison fluidique directe du système de circuit de fluide frigorigène à l'étage séparateur (140) pendant la première phase d'entretien et la dérivation de la liaison d'écoulement du système de circuit de fluide frigorigène du système de climatisation de véhicule à l'étage séparateur (140) en passant par la pompe à vide (113) pendant la seconde phase d'entretien, de telle sorte que des gaz résiduels pompés dans la seconde phase d'entretien sont guidés au moyen du compresseur frigorifique (112) à travers l'étage séparateur (140) et la quantité du résidu de fluide frigorigène alors recueilli est déterminée.

11. Appareil d'entretien selon la revendication 10, **caractérisé en ce que** le séparateur est configuré comme échangeur de chaleur, dans lequel de la chaleur de compression du compresseur (112) livre de la chaleur d'évaporation pour du fluide frigorigène venant de s'écouler.

12. Appareil d'entretien selon la revendication 10 ou 11, **caractérisé en ce que** le séparateur est configuré comme échangeur de chaleur à double enveloppe (142), dans lequel du fluide frigorigène comprimé est guidé à travers un système fermé, constitué d'au moins un tube d'échangeur de chaleur (142C), dans un contenant intérieur (142A) et un contenant extérieur (142B) de l'échangeur de chaleur à double enveloppe (142).

13. Appareil d'entretien selon l'une des revendications 10 à 12, **caractérisé en ce que** l'au moins un bloc de soupapes d'inversion (130 ; 151) est pourvu d'un capteur de pression (131) qui est relié à un collecteur pour mélange fluide frigorigène / huile de compresseur et destiné à faire passer les soupapes de leur position dans la première phase d'entretien à leur position dans la seconde phase d'entretien.

14. Appareil d'entretien selon l'une des revendications 10 à 13, **caractérisé en ce que** l'au moins un bloc de soupapes d'inversion (130 ; 151) est pourvu d'un interrupteur manométrique (151A) qui est relié à la conduite de liaison entre le côté refoulement de la pompe à vide (113) et le côté aspiration du compresseur (112) et destiné à l'arrêt et la mise en circuit actionnés par pression de la pompe à vide (113) dans la seconde phase d'entretien.
